(19) Europäisches Patentamt European Patent Office Office européen des brevets

(11) **EP 4 496 309 A1**

(12) **EUROPEAN PATENT APPLICATION**
published in accordance with Art. 153(4) EPC

(43) Date of publication:
**22.01.2025 Bulletin 2025/04**

(21) Application number: **23795234.6**

(22) Date of filing: **21.04.2023**

(51) International Patent Classification (IPC):
*H04N 19/149* (2014.01)     *H04N 19/154* (2014.01)

(86) International application number:
**PCT/CN2023/089842**

(87) International publication number:
**WO 2023/207801 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210470353**

(71) Applicant: **BIGO TECHNOLOGY PTE. LTD.**
**Singapore 117440 (SG)**

(72) Inventor: **BAO, Jiajing**
**Beijing 100102 (CN)**

(74) Representative: **Yang, Shu**
**Withers & Rogers LLP**
**2 London Bridge**
**London SE1 9RA (GB)**

(54) **VIDEO STREAM FRAME RATE ADJUSTMENT METHOD AND APPARATUS, AND DEVICE, MEDIUM AND PRODUCT**

(57)    The present application relates to a video stream frame rate adjustment method and apparatus, and a device, a medium and a product. The method comprises: acquiring the current image frame, which is required to generate a video stream; determining a subjective evaluation parameter of the current image frame, wherein the subjective evaluation parameter comprises a reference frame rate which is suitable for encoding the current image frame, and a subjective quality index which can be expected to be obtained by means of performing encoding according to the reference frame rate; inputting an outlet bandwidth of an encoder into a parameter optimization model, so as to obtain an approximation function, under the outlet bandwidth, for representing a mapping relation between an encoding frame rate and an objective quality index; and applying the approximation function to find a numerical approximation point corresponding to the subjective evaluation parameter, and obtaining, as an optimal frame rate for encoding the current image frame, an encoding frame rate corresponding to the numerical approximation point.

```
┌─────────────────────────────────────────────────────────────────┐  S1100
│ Acquiring a current image frame required for generating a video   │
│ stream                                                            │
└─────────────────────────────────────────────────────────────────┘
                              │
                              ▼
┌─────────────────────────────────────────────────────────────────┐  S1200
│ Determining a reference frame rate and a subjective quality       │
│ indicator matching the current image frame, the subjective        │
│ assessment parameters including a reference frame rate suitable    │
│ for encoding the current image frame and a subjective quality     │
│ indicator to be acquired by encoding at the reference frame rate   │
└─────────────────────────────────────────────────────────────────┘
                              │
                              ▼
┌─────────────────────────────────────────────────────────────────┐  S1300
│ Acquiring, by inputting an output bandwidth of an encoder into a   │
│ parameter optimization model, an approximate function             │
│ characterizing a mapping relationship between encoding frame       │
│ rates and objective quality indicators at the output bandwidth     │
└─────────────────────────────────────────────────────────────────┘
                              │
                              ▼
┌─────────────────────────────────────────────────────────────────┐  S1400
│ Solving a numerical approximation point corresponding to the       │
│ subjective assessment parameters using the approximate function,   │
│ and acquiring an encoding frame rate corresponding to the          │
│ numerical approximation point as an optimal frame rate for         │
│ encoding the current image frame                                   │
└─────────────────────────────────────────────────────────────────┘
```

FIG. 3

EP 4 496 309 A1

## Description

### TECHNICAL FIELD

The present disclosure relates to the technical field of video transmissions, and in particular, relates to a method and an apparatus for adjusting a video stream frame rate and a device, a medium, and a product thereof.

### BACKGROUND

In the case of given bandwidth and resolution, a frame rate is adjusted to change a transmission bitrate to achieve transmission control of video streams. This approach is typically based on network conditions or hardware conditions of computer devices, with a purpose of meeting actual conditions of the network or hardware but without considering an actual viewing experience of audience in terms of frame rate changes over time.

Specifically, according to traditional encoding principles, a quality, a frame rate, and resolution of a video change with the bandwidth. Assuming that the resolution remains constant, in the case that a changeable range of the frame rate is large, a changeable range of the video quality is smaller, such that image compression is difficult unless the resolution is lowered. By lowering the resolution, the changeable ranges of the frame rate and the video quality are more flexible, such that an encoding process is more flexible. However, it is not user-friendly in the case that the problem is addressed only by lowering the frame rate without considering the actual viewing experience of the user.

Therefore, the transmission control technology for video streams still requires to be improve greatly.

### SUMMARY

The present disclosure aims to provide a method and an apparatus for adjusting a video stream frame rate, and a device, a non-transitory readable storage medium, and a computer program product thereof.

According to some embodiments of the present disclosure, a method for adjusting a video stream frame rate is provided. The method includes:

acquiring a current image frame required for generating a video stream;
determining a reference frame rate and a subjective quality indicator matching the current image frame;
acquiring, by inputting an output bandwidth of an encoder into a parameter optimization model, an approximate function characterizing a mapping relationship between encoding frame rates and objective quality indicators at the output bandwidth; and
solving a numerical approximation point corresponding to the subjective assessment parameters using the approximate function, and acquiring an encoding frame rate corresponding to the numerical approximation point as an optimal frame rate for encoding the current image frame.

According to some embodiments of the present disclosure, an apparatus for adjusting a video stream frame rate is provided. The apparatus includes:

an image acquisition module, configured to acquire a current image frame required for generating a video stream;
a subjective assessment module, configured to determine subjective assessment parameters of the current image frame, wherein the subjective assessment parameters include a reference frame rate suitable for encoding the current image frame and a subjective quality indicator to be acquired by encoding at the reference frame rate;
a function modulation module, configured to acquire , by inputting an output bandwidth of an encoder into a parameter optimization model, an approximate function characterizing a mapping relationship between encoding frame rates and objective quality indicators at the output bandwidth; and
a frame rate determination module, configured to solve a numerical approximation point corresponding to the subjective assessment parameters using the approximate function, and acquire an encoding frame rate corresponding to the numerical approximation point as an optimal frame rate for encoding the current image frame.

According to some embodiments of the present disclosure, a device for adjusting a video stream frame rate is provided. The device includes a central processing unit and a memory, wherein the central processing unit, when calling and running one or more computer programs stored in the memory, is caused to perform the method for adjusting a video stream frame rate according to the present disclosure.

According to some embodiments of the present disclosure, a non-transitory readable storage medium is provided. The non-transitory readable storage medium stores one or more computer programs implemented by the method for adjusting the video stream frame rate in a form of one or more computer-readable instructions; the one or more computer programs, when called and run by a computer, cause the computer to perform the method.

According to some embodiments of the present disclosure, a computer program product including one or more computer programs/instructions is provided. The one or more computer programs/instructions, when loaded and executed by a processor, cause the processor to perform the method in any one of the embodiments of the present disclosure.

## BRIEF DESCRIPTION OF THE DRAWINGS

FIG. 1 is a schematic diagram of a network architecture corresponding to a network live streaming environment applicable to the present disclosure;

FIG. 2 is a schematic diagram of a principle of a method for adjusting a video stream frame rate according to the present disclosure;

FIG. 3 is a schematic flowchart of a method for adjusting a video stream frame rate according to some embodiments of the present disclosure;

FIG. 4 is a schematic flowchart of a process of acquiring a current image frame according to some embodiments of the present disclosure;

FIG. 5 is a schematic flowchart of a process of determining whether to recalculate subjective assessment parameters according to some embodiments of the present disclosure;

FIG. 6 is a schematic flowchart of a process of determining subjective assessment parameters of a current image frame according to some embodiments of the present disclosure;

FIG. 7 is a schematic flowchart of a process of iterating a parameter optimization model according to some embodiments of the present disclosure;

FIG. 8 is a schematic flowchart of a process of calculating an objective quality indicator based on a video stream according to some embodiments of the present disclosure;

FIG. 9 is a principle block diagram of an apparatus for adjusting a video stream frame rate according to some embodiments of the present disclosure; and

FIG. 10 is a schematic structural diagram of a device for adjusting a video stream frame rate applicable to the present disclosure.

## DETAILED DESCRIPTION

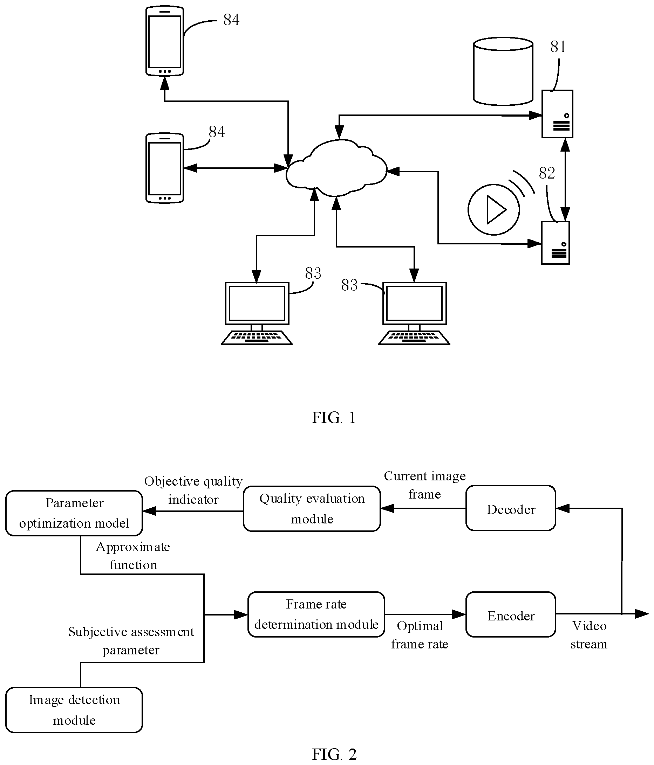

Referring to FIG. 1, a network architecture applicable to an exemplary application scenario of the present disclosure is configured to deploy network live streaming services. The encoding process of the video stream in the network live streaming service is practicable by running a computer program product according to any one of the embodiments of the present disclosure. The application server 81 shown in FIG. 1 is configured to support operation of live streaming room instances, and the media server 82 is configured to handle decoding and encoding processes of the video streams pushed by various live streaming users to achieve relaying. The terminal devices such as the computer 83 and the mobile phone 84, as clients, are generally provided for terminal users. In addition, in the case where the video stream needs to be encoded on the terminal device, the computer program product according to the embodiments of the present disclosure can also be deployed on the terminal device, such that the method according to any one of the embodiments of the present disclosure is applicable to encoding the video image collected by the camera. In other words, the above application scenario is only for exemplary purpose, and the method for adjusting the video stream frame rate according to the present disclosure is applicable to all scenarios where the video stream needs to be encoded.

The principle block diagram shown in FIG. 2 shows the principle of implementing various embodiments of the present disclosure. As can be seen from the drawing, for providing the encoder with the optimal frame rate parameters to adaptively control the encoder to encode the image frames of the video stream, a parameter optimization model simulates, based on the output bandwidth of the encoder, an approximate function characterizing the mapping relationship between the encoding frame rates and the objective quality indicators. An image detection module determines, based on the video stream, the subjective assessment parameters of the current image frame determined based on the image subjective quality evaluation method. The subjective assessment parameters include the reference frame rate and subjective quality indicators.

The approximate function and the subjective assessment parameters both include the corresponding relationship between the frame rates and the quality indicators. The approximate function is inferred by the parameter optimization model and optimized by the objective quality indicators of the encoded image frames. Therefore, the inferred quality indicators are quantified and determined in the form of objective quality indicators. The quality indicators in the subjective assessment parameters are determined based on data acquired by quantifying subjective perceptions by the image subjective quality evaluation method, and thus the quality indicators are quantified and determined in the form of subjective quality indicators.

Furthermore, a frame rate determination module acquires, by solving a numerical approximation point of the approximate function and the subjective assessment parameters, an encoding frame rate corresponding to the numerical approximation point as an optimal frame rate to control the encoder to encode the image frames at the optimal frame rate. The encoded video stream is remotely pushed for transmission.

In addition, a quality evaluation module calculates, based on the original current image frame, the current image frame corresponding to the video stream decoded by the decoder and determines the objective quality indicators actually acquired for the current image frame , and the weight parameters of the parameter model are corrected based on the objective quality indicators and the optimal frame rate in encoding through backpropagation, such that the parameter optimization model is iterated to improve the predictive capability of simulating the approximate function, such that the optimal frame rate is solved, and a high-quality encoding effect is achieved by continuously optimizing encoding efficiency in the video stream encoding process.

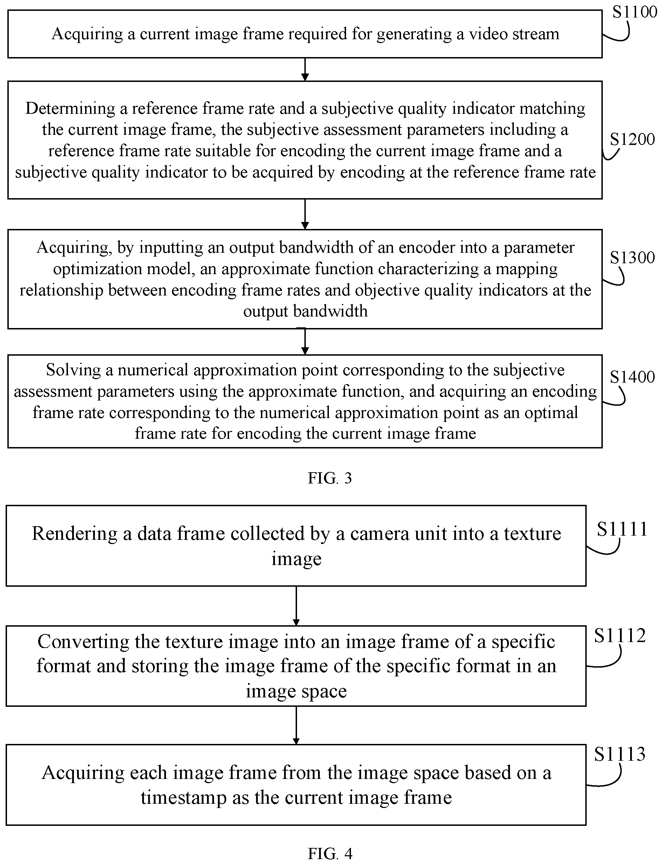

Referring to FIG. 3, a method for adjusting a video stream frame rate is provided according to some embodiments of the present disclosure. In some embodiments, the method includes following processes.

In S1100, a current image frame required for generating a video stream is acquired.

The video stream is a video stream in a network live streaming transmission and is provided by a live streaming user of the network live streaming. The video stream includes a plurality of image frames, and each image frame is processed as the current image frame by the method according to the present disclosure to control the encoder to encode each current image frame into the video stream.

The current image frame is acquired from the image space prior to encoding and is generally stored in a specific format, such as a YUV format or an RGB format, which is flexibly determined by those skilled in the art.

In S1200, a reference frame rate and a subjective quality indicator matching the current image frame are determined, wherein the subjective assessment parameters include a reference frame rate suitable for encoding the current image frame and the subjective quality indicator to be acquired by encoding at the reference frame rate.

The subjective quality indicator corresponding to each current image frame in the video stream can be determined by referring to the image subjective quality evaluation method.

In some embodiments, the image subjective quality evaluation method is pre-performed to provide video content at a plurality of different frame rates and playback for viewers to watch. Then, scores from various viewers are acquired from multiple predetermined dimensions, and the scores given by the viewers are weighted and quantified into a subjective quality indicator. A mapping relationship table is established between the corresponding subjective quality indicators and the plurality of frame rates, and is then used as a reference to determine the reference frame rate matching the current image frame and the subjective quality indicator in the present disclosure. Accordingly, in the case where the reference frame rate matching the current image frame and the corresponding subjective quality indicator require to be determined, the reference frame rate corresponding to the preceding image frame of the current image frame is correspondingly adjusted based on the change in image complexity of the current image frame relative to the preceding image frame, such that the reference frame rate corresponding to the current image frame is acquired. Based on the acquired reference frame rate, the corresponding subjective quality indicator is determined using the mapping relationship data, such that a reference frame rate and a corresponding subjective quality indicator are acquired, which constitute the subjective assessment parameters of the current image frame.

It can be seen that the reference frame rate, as intermediate data for reference, constitutes a frame rate encoding condition of the current image frame. Correspondingly, the subjective quality indicator refers to an image quality subjective evaluation result that is predictable in the case where the reference frame rate is the encoding condition.

In some embodiments, data fitting is performed on the mapping relationship table determined by the image subjective quality evaluation method to acquire a corresponding subjective curve function, such that the subjective quality indicator corresponding to each current image frame is quickly acquired based on the reference frame rate for each current image frame, and the subjective assessment parameters are further acquired. In this case, as the subjective curve function exhibits linear characteristics upon fitting, the subjective assessment parameters determined based on the function are smooth.

The current image frame belongs to a transition image indicating a scene change in the video scene relative to the preceding image frame. Alternatively, the current image frame belongs to a non-transition image. In some embodiments, whether to recalculate the subjective quality parameters is determined based on whether the current image frame belongs to the transition image. In the case where the subjective quality parameters are not required to be recalculated, the subjective quality parameters already generated in the current scene containing the current image frame are acquired for direct use.

In S1300, an approximate function characterizing a mapping relationship between encoding frame rates and objective quality indicators at an output bandwidth is acquired by inputting the output bandwidth of an encoder into a parameter optimization model.

The output bandwidth of the encoder is an objective condition and has relative determinacy limited by network conditions and/or hardware conditions. In the embodiments, the output bandwidth is input into the parameter optimization model to control the parameter optimization model to simulate the approximate function that solves the optimal frame rate of the encoder.

The parameter optimization model is acquired by pre-modeling. For example, as the resolution needs to be stable in the transmission of the same video stream, and the encoding frame rate and objective quality indicator are highly flexible with the change in the output bandwidth of the encoder, data fitting is performed on the objective quality indicators and the encoding frame rates of different video streams at a specific output bandwidth, and the fitting result shows that the encoding frame rate and the objective quality indicator of the video stream follow a natural logarithm distribution. Based on the principle, the parameter optimization model is acquired by modeling.

An exemplary parameter optimization model is constructed according to the following formula:

$$y_{psnr} = A * \ln(fps) + B$$

$y_{psnr}$ represents an exemplary objective quality indicator, $fps$ represents the frame rate, $A$ represents a learnable weight parameter, and $B$ represents a learnable bias parameter. $A$ and $B$ constitute the learnable parameters of the model. According to the formula, the parameter optimization model corrects the weight parameter and the bias parameter based on the objective quality indicator of the image frame output by the encoder to iteratively train to continuously approach convergence.

Based on the exemplary modeling principle of the parameter optimization model, the core of the parameter optimization model is to construct a data curve corresponding to the mapping relationship between the output bandwidth, the encoding frame rates, and the objective quality indicators, such that the mapping relationship between the encoding frame rates and the objective quality indicators is predicted based on the output bandwidth, that is, the approximate function is determined. By determining a corresponding point on the determined approximate function, the specific encoding frame rate and the objective quality indicator are determined. Thus, the data curve corresponding to a specific output bandwidth essentially reflects a set of the mapping relationship data between the encoding frame rates and the objective quality indicators at the specific output bandwidth. The set of the mapping relationship data is represented by the approximate function acquired by the parameter optimization model. Consequently, the approximate function is acquired based on the output bandwidth.

It should be noted that S1200 and S1300 can be performed concurrently or can be exchangeable, and are not limited by the sequence listed in the present disclosure.

In addition, the parameter optimization model can be modeled as a machine learning model with low computational resource utilization or as a more intelligent deep learning model, as long as the parameter optimization model achieves the functions described in the present disclosure based on the above principles.

In S1400, a numerical approximation point corresponding to the subjective assessment parameters is solved using the approximate function, and an encoding frame rate corresponding to the numerical approximation point is acquired as the optimal frame rate for encoding the current image frame.

In a more illustrative sense, the approximate function characterizes the linear mapping relationship data of between the encoding frame rates and the objective quality indicators at a specific output bandwidth, and is depicted as a data curve in a Cartesian coordinate system. The subjective assessment parameter corresponding to the current image frame, that is, the reference frame rate and the subjective quality indicator corresponding to the reference frame rate, is depicted as a point in the Cartesian coordinate system.

Accordingly, in some embodiments, a point on a data curve with the shortest distance is determined by calculating the point on the data curve of the approximate function with the shortest distance from the point corresponding to the subjective parameter model in the Cartesian coordinate system, and the point is determined as the numerical approximation point on the data curve. The numerical approximation point corresponds to the mapping relationship data between the encoding frame rates and the objective quality indicators, and the encoding frame rate is determined as the optimal frame rate.

In some embodiments, based on the mapping relationship data between the reference frame rates and the subjective quality indicators determined by the image subjective quality evaluation method, a subjective curve function is acquired by data fitting in advance. In this case, an intersection point between the subjective curve function and the approximate function is calculated. The intersection point is the numerical approximation point, and thus the corresponding encoding frame rate is also acquired and determined as the optimal frame rate.

The optimal frame rate determined in the present disclosure is input into the encoder to control the encoder to encode the current image frame at the optimal frame rate, such that the current image frame is encoded into the video stream.

Based on the above embodiments, it can be seen that, compared to some practices, under constraint of the output bandwidth of the encoder in the present disclosure, the corresponding relationship between the frame rate change and the image quality change is assessed by determining the subjective assessment parameters of the current image frame in the video stream. The subjective assessment parameters include the reference frame rate suitable for encoding the current image frame and the subjective quality indicator to be acquired by encoding at the reference frame rate. The parameter optimization model predicts the approximate function characterizing the mapping relationship between the encoding frame rates and the objective quality indicators. On this basis, the numerical approximation point corresponding to the subjective assessment parameters is acquired based on the approximate function, and then the optimal frame rate required for encoding is determined based on the numerical approximation point to control the encoder to encode and output the current image frame, such that the objective quality indicator of the encoded video stream generated by encoding conforms to tuning of the subjective quality indicator. Thus, the stable and smooth output of the video stream is ensured, and the overall quality of the video image is improved.

Referring to FIG. 4, based on the above embodiments, S 1100, that is, acquiring the current image frame required for generating the video stream, includes the following processes.

In S1111, a data frame collected by a camera unit is rendered into a texture image.

The computer program product according to the present disclosure is deployed on a terminal device, such as a personal computer or a mobile terminal used by a live streaming user in network live streaming for generating live streaming video streams. The camera unit installed on the terminal device is configured to collect real-world images to generate the video stream.

The images are collected upon start of the camera unit, and image data is acquired in a form of data frame. Then, predetermined textures are used to draw the images to generate texture data, and the texture data is rendered to a graphical user interface of the terminal device.

In S1112, the texture image is converted into an image frame of a specific format and stored in an image space.

Upon conventional image preprocessing, the texture image is further converted into the image frame of the specific format and stored in the image space. The image space is a color space corresponding to a color encoding method of the corresponding specific format. The specific format is a YUV format or an RGB format, and the type of the format does not affect the inventive spirit of the present disclosure.

In S1113, each image frame is acquired from the image space based on a timestamp and determined as the current image frame.

In encoding process, the encoder continuously calls various image frames from the image space, and the called image frame is determined as the current image frame for encoding by the encoder. As the encoding process requires sequential organization of the image frames in the video stream, various image frames are sequentially acquired based on the timestamps frame by frame, and each acquired image frame is the current image frame.

Based on the above embodiments, it can be seen that the present disclosure is applicable to being deployed on the terminal device. The terminal device encodes the image frames collected by the camera unit at the optimal frame rate acquired in the present disclosure, such that the high-quality image transmission is achieved on the premise of adaptive and stable transmission of the video stream.

Based on the above embodiments, in some embodiments different from the previous embodiments, S 1100, that is, acquiring the current image frame required for generating the video stream, includes the following processes.

In S1121, an image frame of a specific format is acquired by decoding an original video stream submitted by a terminal device, and the image frame of the specific format is stored in an image space.

The computer program product of the present disclosure is deployed on a server, such as a media server for a network live streaming service. The media server is configured to receive a video stream uploaded by the live streaming user in the live streaming room of the network live streaming service, decode the video stream to acquire image frames encoded in a default format therein, and store the image frames in the image space, such that the stream mixing or format conversion is performed on the image frames to acquire the image frames of the specific format stored in the image space. Thus, the image frames are encoded into the video stream based on network conditions and/or hardware conditions of receiver users for output.

In S 1122, each image frame is acquired from the image space based on a timestamp and determined as the current image frame.

Similarly, In encoding process, the encoder continuously calls various image frames from the image space, and the called image frame is determined as the current image frame for encoding by the encoder. As the encoding process requires sequential organization of the image frames in the video stream, various image frames are sequentially acquired based on the timestamps frame by frame, and each acquired image frame is the current image frame.

Based on the above embodiments, it can be seen that the present disclosure is applicable to being deployed on the server. The server decodes and then re-encodes the image frames of the video stream uploaded by the terminal device at the optimal frame rate acquired in the present disclosure, such that the high-quality image transmission is achieved on the premise of adaptive and stable transmission of the video stream.

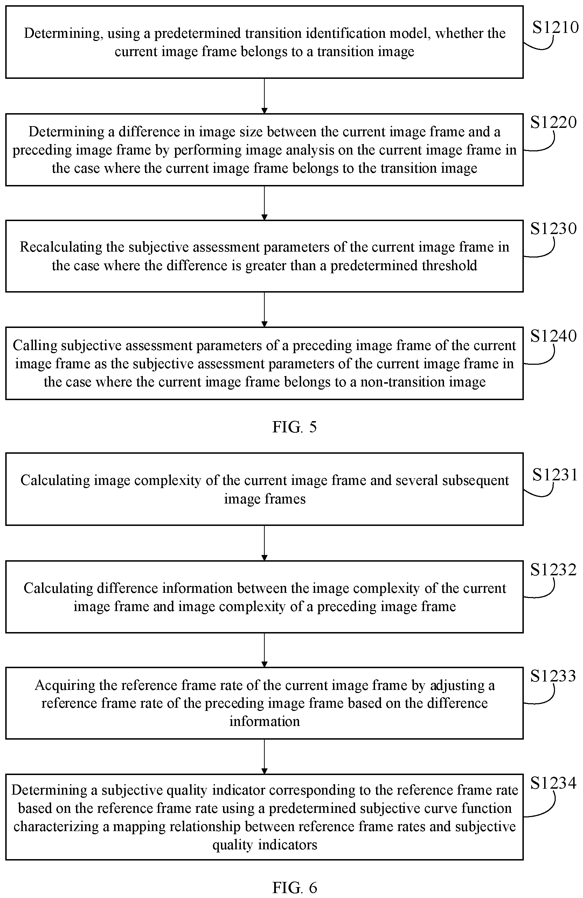

Referring to FIG. 5, based on the above embodiments, S1200, that is, determining the subjective assessment parameters of the current image frame, includes the following processes.

In S1210, whether the current image frame belongs to a transition image is determined using a predetermined transition identification model.

The scene change occur in the video stream, and whether the current image belongs to the transition image is determined by identifying the current image frame to determine whether the scene change occurs for the current image frame relative to the preceding image frame. The scene change usually mean a significant change in the scale of image data. Therefore, identification of whether the current image frame belongs to the transition image is determined as a basis for determining whether the subjective assessment parameters used for the current image frame need to be redetermined.

In identifying whether the current image frame belongs to the transition image, any feasible transition identification method may be used. The principle is that the image change information between the current image frame and the preceding image frame adjacent in timing is compared. In the case of a significant change in the image change information, the current image frame belongs to the transition image.

In one exemplary identification method, the information difference between the current image frame and the image frame preceding in timing is calculated. In the case where the information difference is greater than a predetermined threshold, the current image frame belongs to the transition image.

In another exemplary identification method, the transition identification model is a deep-learning-based model. In an example model structure, Resnet is used as a backbone model to acquire comprehensive feature information using feature concatenation upon extracting image feature information from the current image frame and the preceding image frame. The comprehensive feature information is input into a classifier through a fully connected layer, a classification probability of the current image frame belonging to the transition image is output by the classifier, and whether the current image frame belongs to the transition image is determined based on the classification probability. It should be noted that the transition identification model should first be trained to a convergence state using a sufficient number of training samples, which can be implemented by those skilled in the art.

In S 1220, a difference in image size between the current image frame and a preceding image frame is determined is determined by performing image analysis on the current image frame in the case where the current image frame belongs to a transition image.

For convenient determination of whether the subjective assessment parameters of the current image frame require to be recalculated based on the current scene, the image analysis is performed on the transition image upon determination that the current image frame belongs to the transition image. Whether a significant change occurs in a bitstream of the encoder by comparing the difference in image size between the current image frame and the preceding image frame adjacent in timing, such that the subjective assessment parameters of the current image frame is timely adjusted in response to the change in the bitstream, and are determined as the subjective assessment parameters of various image frames in the current scene to guide encoding of subsequent image frames in the current scene.

In S1230, in the case where the difference is greater than a predetermined threshold, the subjective assessment parameters of the current image frame are recalculated.

The difference in image size is analyzed and compared to the predetermined threshold. The predetermined threshold is an empirical threshold or a measured threshold. In the case where the difference in image size is less than the predetermined threshold, the bitstream change is small, and the subjective assessment parameters are not required to be redetermined, and the subjective assessment parameters from the previous scene are used. In the case where the difference in image size is greater than the predetermined threshold, the bitstream change is great, and the range of change in the encoding frame rate of the encoder is also large. In this case, the subjective assessment parameters are redetermined based on the image complexity of the current image frame or based on the image complexity of the current image frame and image complexities of a plurality of subsequent image frames to redetermine the subjective assessment parameters applicable to various image frames in the current scene.

In S 1240, in the case where the current image frame belongs to a non-transition image, subjective assessment parameters of the preceding image frame of the current image frame are called as the subjective assessment parameters of the current image frame.

In the case where the current image frame is determined to belong to the non-transition image frame, the scene is unchanged. In this case, as the subjective assessment parameters of the scene have already been calculated and determined at a moment corresponding to a first image frame identified as the transition image in the scene, the subjective assessment parameters are not required to be recalculated for the current image frame, and the pre-determined subjective assessment parameters for the current scene are directly used.

It should be noted that the computer program product according to the present disclosure, when starting to work, identifies the first image frame as the current image frame and determines the corresponding subjective assessment parameters of the current image frame. In this case, a reference basis may be lacked in calculation of the subjective assessment parameters. Therefore, adaptive initialization is performed in advance, such as providing default initialized subjective assessment parameters for the scene corresponding to the first image frame to call.

Based on the above embodiments, it can be seen that in the encoding process of each image frame in the video stream, transition identification is performed for each current image frame, and whether to redetermine the subjective assessment parameters for the current scene is determined based on potential bitstream changes. That is, whether to redetermine the subjective assessment parameters is determined by transition identification and based on whether the difference in image size is greater than the predetermined threshold. In this way, the computational pressure on the computer device is minimized, frequent redetermination of the subjective assessment parameters is avoided, and the stability of the optimal frame rate is maintained within a change range, such that the overall encoding efficiency is improved.

Referring to FIG. 6, based on the above embodiments, S1200, that is, determining the subjective assessment parameters of the current image frame, or S1230, that is, recalculating the subjective assessment parameters of the current image frame in the case where the difference is greater than the predetermined threshold, includes the following processes.

In S1231, image complexity of the current image frame and several subsequent image frames is calculated.

Video encoding and the image complexity of an image frame sequence are closely correlated with each other. The image complexity of the sequence includes temporal complexity and spatial complexity. The more details in the video image, the greater the spatial complexity; and the more intense the motion in the video content, the greater the temporal complexity. The greater the image complexity, the more data required for encoding under the same image quality. Therefore, the image complexity is acquired by assessing the temporal complexity and the spatial complexity of the sequence. The image frame sequence is formed in a case where the current image frame acts as the initial image frame and a predetermined number of consecutive image frames are subsequent.

For example, TIandSI is used to calculate the temporal complexity and the spatial complexity. Temporal perceptual information (TI, also referred to as the temporal complexity) and spatial perceptual information (SI, also referred to as the spatial complexity) are recommended to measure the characteristics of the video in ITU-R BT. 1788. The TIandSI tool is commonly used in the art for the temporal complexity and the spatial complexity of images, and provides a command line version TISIcmd, which is upgraded and evolved into TIandSI subsequently. The TISIcmd and the TIandSI both provide corresponding calling interfaces for calculating the temporal complexity and the spatial complexity of image frames, such that the image complexity of the sequence of image frame is acquired.

In S 1232, difference information between the image complexity of the current image frame and image complexity of a preceding image frame is calculated.

As the process of encoding the video stream is continuously performed for various image frames, the corresponding image complexity of at least one image frame preceding in timing of each current image frame that does not belong to the first image frame of the video stream has already been determined based on the principles described in the present disclosure. In this case, the difference information in image complexity between the current image frame and the preceding image frame is determined by subtracting the image complexity of the preceding image frame from the image complexity of the current image frame. The difference information is quantified as a value for calculation.

The current image frame belonging to the first image frame does not have a preceding image frame, and thus the reference image complexity of the current image frame is determined as zero for processing. Thus, similarly, the difference information of the image complexity corresponding to the current image frame is also determined.

In S1233, the reference frame rate of the current image frame is acquired by adjusting a reference frame rate of the preceding image frame based on the difference information.

A mapping relationship data between the difference information of image complexities and the frame rate changes is pre-quantified, such that a change range of encoding frame rate caused by the change of the image complexity is quantified. On this basis, a change value of a theoretically applicable frame rate for adjusting the current image frame relative to the preceding image frame is determined based on the change of the difference information. That is, in the case where the reference frame rate for the preceding image frame for solving the encoding frame rate in conjunction with the approximate function acquired by the parameter optimization model has already been determined, the change value for adjusting the frame rate based on the reference frame rate of the preceding image frame is first determined based on the difference information, and then the change value is added on the reference frame rate of the preceding image frame to adjust the frame rate correspondingly, such that the reference frame rate corresponding to the current image frame is acquired. A relative difference method for determining the reference frame rate of the current image frame can maintain data smoothness and avoid drastic fluctuation of the image quality in the encoded video stream due to inconsistent data reference.

In addition, it should be understood that because the image complexity in the embodiments is determined based on the current image frame and several subsequent image frames, in the case where the current image frame belongs to an image frame from the second scene, the reference frame rate of the preceding image frame is usually also the reference frame rate of the preceding first scene.

In S1234, a subjective quality indicator corresponding to the reference frame rate is determined based on the reference frame rate using a predetermined subjective curve function characterizing a mapping relationship between the reference frame rates and the subjective quality indicators.

It can be understood that in the case where the output bandwidth of the encoder is determined, changes in the temporal complexity and the spatial complexity of the image frames in the image frame sequence affect the change in the encoding frame rate. Such change relationship can be determined in advance by those skilled in the art.

For example, a mapping relationship table between the reference frame rates and the subjective quality indicators is established by any feasible image subjective quality evaluation method, such as DSIS, DSCQS, SSM, SSCQE, and the like, such that the subjective quality indicator for a reference frame rate is queried based on the mapping relationship table. The frame rate in the mapping relationship table determined by the image subjective quality evaluation method is mainly used to indicate intermediate data for reference only, and thus the frame rate is referred to as the reference frame rate.

In some embodiments, in determining the mapping relationship table, a plurality of consecutive reference frame rates are combined into a same frame rate range to establish the mapping relationship between the reference frame rates and the subjective quality indicators. For example, the frame rate range of 21 fps to 18 fps is mapped to a subjective quality indicator. The mapping relationship between the reference frame rates and the subjective quality indicators is established in a form of a frame rate range because subjective perception of the user is insensitive to some frame rate differences within the frame rate change range. Therefore, the mapping relationship between the frame rate ranges and the subjective quality indicators is established to improve the efficiency of establishing the mapping relationship table and reduce computational complexity.

Upon determination of the mapping relationship table, data fitting is performed based on the mapping relationship table to acquire a data curve and thus acquire a corresponding subjective curve function that characterizes the mapping relationship between the reference frame rates and subjective quality indicators.

In the case where the subjective quality indicator needs to be determined based on the reference frame rate corresponding to the current image frame, the reference frame rate of the current image frame is substituted into the subjective curve function to calculate the corresponding subjective quality indicator. The reference frame rate and the subjective quality indicator of the current image frame form a data pair, that is, the subjective assessment parameter of the current image frame.

It should be noted that the S1231 to S1234 are performed in the case where the subjective assessment parameters of the current image frame need to be recalculated upon transition identification on the current image frame. Alternatively, S1231 to S1234 are performed independently without depending on the transition identification process.

Based on the above embodiments, it can be seen that in determining the subjective assessment parameters of the current image frame for solving the numerical approximation point in conjunction with the approximate function of the parameter optimization model, the difference information is assessed based on the image complexity between the current image frame and the preceding image frame, the reference frame rate corresponding to the current image frame is acquired by correcting the reference frame rate of the preceding image frame based on the corresponding relationship between the difference information and the frame rate change, the subjective quality indicator of the current image frame at the reference frame rate is determined using the subjective curve function determined by the image subjective quality evaluation method to form the subjective assessment parameters, and the subjective assessment parameters are used to determine the optimal frame rate required for encoding the current image frame. In the process, the computational load is low, and the operational efficiency is high. The acquired subjective assessment parameters serve as a reference for indicating the subjective quality perception of the user. The corresponding optimal frame rate is determined by solving the numerical approximation point based on the subjective assessment parameters using the approximate function of the parameter optimization model and then is encoded, such that the encoded video stream achieves excellent subjective quality indicators on the premise of ensuring transmission efficiency.

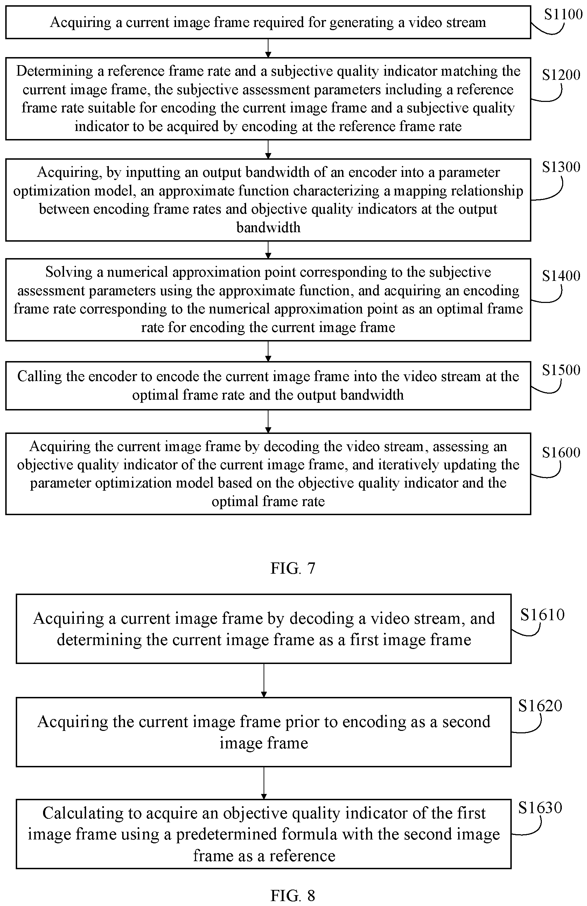

Referring to FIG. 7, in some embodiments based on any one of the embodiments of the present disclosure, upon determining the optimal frame rate, the method further includes following processes.

In S1500: the encoder is called to encode the current image frame into the video stream at the optimal frame rate and the output bandwidth.

Upon determination of the optimal frame rate, the optimal frame rate is used as the encoding frame rate for the encoder to encode the current image frame. The encoder encodes the current image frame of a given resolution under the constraint of a given output bandwidth, such that the current image frame is encoded into the video stream. It should be understood that for the subsequent image frames after the current image frame, in the case where the scene is unchanged, the subsequent image frames are encoded at the same optimal frame rate probably.

In S1600, the current image frame is acquired by decoding the video stream, an objective quality indicator of the current image frame is assessed, and the parameter optimization model is iteratively updated based on the objective quality indicator and the optimal frame rate.

The video stream encoded by the encoder is continuously output. For example, the video stream encoded by the media server is broadcast and pushed to the terminal users in the live streaming room, or the video stream encoded by the terminal device of the live streaming user in the live streaming room is pushed to the media server.

A local device decodes the encoded output video stream to acquire the current image frame. Furthermore, the local device correspondingly acquires the current image frame prior to encoding based on the timestamp of the decoded current image frame, calls the algorithm corresponding to the objective quality indicator to calculate the objective quality indicator corresponding to the current image frame in the video stream by referring to the current image frame prior to encoding, and corrects the weight parameters and bias parameters of the parameter optimization model by backpropagating the objective quality indicators and the optimal frame rate corresponding to the current image frame, such that the parameter optimization model continuously approximates and converges to gradually improve a capability of predicting the optimal frame rate meeting encoding requirements of the image frame.

In the recommended embodiments, in correcting the weight of the parameter optimization model, the least square method is used to calculate a model loss value based on the optimal frame rate and the objective quality indicator, and then the weight is corrected based on the model loss value.

Based on the above embodiments, it can be seen that the objective quality indicators corresponding to various image frames of the encoded output video stream are calculated, and the learnable parameters of the parameter optimization model are back-corrected based on the objective quality indicator and the optimal frame rate to iteratively upgrade the parameter optimization model and continuously improve the capability for determining the optimal frame rate of the encoder. In this way, the video stream encoding process is dynamically and flexibly controlled, such that the parameter optimization model adaptively controls the encoder to adjust the encoding frame rate based on the subjective quality perception at the given output bandwidth. Thus, the stable and smooth output of the video stream is ensured, and the overall quality of the video image is improved.

Referring to FIG. 8, based on the previous embodiments, S1600, that is, acquiring the current image frame by decoding the video stream and assessing the objective quality indicator of the current image frame, includes the following processes.

In S1610, the current image frame is acquired by decoding the video stream, and the current image frame is determined as a first image frame.

As described above, each current image frame encoded and output by the encoder is contained in the video stream and transmitted to devices such as the media server or the terminal device. Therefore, the image frames in the video stream theoretically represent the image quality acquirable by a receiver device. Accordingly, the video stream output by the encoder is decoded to acquire various image frames in the video stream, such that the corresponding objective quality indicators are calculated. A specified current image frame is referred to as the first image frame.

In S 1620, the current image frame prior to encoding is acquired as a second image frame.

The current image frame before being encoded by the encoder is acquired based on the corresponding relationship on the timestamp and determined as the second image frame to calculate the objective quality indicator of the first image frame. The acquisition of the second image frame is achieved by extraction from the previous image space of the encoder.

In S1630: the objective quality indicator of the first image frame is calculated and acquired using a predetermined formula with the second image frame as a reference.

The type of the objective quality indicator is not limited to the above examples. Specifically, in the case where the computer program product according to any one of the embodiments of the present disclosure is deployed on a terminal device, the objective quality indicator is represented by a mean square error (MSE) or a peak signal-to-noise ratio (PSNR). Due to the low computational load, the computing power of the terminal device is saved, and the operational efficiency improved. In the case where the computer program product according to any one of the embodiments of the present disclosure is deployed on a media server, the objective quality indicator is represented by the PSNR, a structural similarity (SSIM), or the MSE. Additionally, in the case where the computing power of the terminal device is sufficient, SSIM is determined as the quality indicator on the terminal device. In this regard, those skilled in the art can flexibly choose the implementation based on the principles described above.

Based on determination of the specific type of the objective quality indicator, the corresponding calculation formula for the objective quality indicator is used calculate the objective quality indicator of the first image frame with reference to the second image frame.

Using the example where the objective quality indicator is the PSNR, a PSNR image quality indicator is a PSNR indicator, the corresponding formula of the algorithm is as follows:

$$PSNR = 10\log_{10}\frac{\left(2^{bits}-1\right)^2}{MSE}$$

*bits* represents a number of bits occupied by each stored pixel.

The PSNR refers to a ratio of energy of a peak signal to average energy of noise, and is usually expressed in decibels (dB) by taking the logarithm (log). As the MSE refers to an energy mean value of a difference between a real image (the second image frame) and a noisy image (the first image frame), and the difference between the real image and the noisy image is the noise, the PSNR is a ratio of the peak signal energy to the MSE.

It can be understood that due to the lower computational complexity of the PSNR, the PSNR is suitable for the terminal device or the server side, which is determined flexibly by those skilled in the art.

The MSE image objective quality indicator is an MSE indicator, and the corresponding formula of the algorithm is as follows:

$$MSE = \frac{\sum_{0\leq i\leq M}\sum_{0\leq j\leq N}\left(f_{ij}-f'_{ij}\right)}{M\times N}$$

$f_{ij}$ and $f_{ij}$ represent the second image frame and the first image frame respectively, and *M* and *N* represent a height and a width of the image frame respectively. As the second image frame and the first image frame are of the same scale, the heights and the widths are identical.

The SSIM is an indicator for measuring similarity of images, and consists of luminance comparison, contrast comparison, and structure comparison. The corresponding formula for the algorithm is flexibly implemented by those skilled in the art, which is omitted herein.

Based on the above embodiments, it can be seen that the objective quality indicator of the encoded image frame is evaluated based on the corresponding relationship between the image frame in the video stream encoded and output by the encoder and the image frame prior to encoding and the actually acquired objective quality indicator of the current image frame output by the encoder is affected by the subjective quality indicator. Therefore, the weight parameters and the bias parameters of the parameter optimization model are corrected using the objective quality indicator and the corresponding optimal frame rate for encoding the current image frame to improve the predictive capability of the parameter optimization model for the optimal frame rate, such that the video images encoded at the optimal frame rate predicted by the parameter optimization model match the perception of the user greatly.

According to some embodiments of the present disclosure, upon S 1500, that is, calling the encoder to encode the current image frame into the video stream at the optimal frame rate and the output bandwidth, the method includes following processes.

In S 1700, the video stream is pushed to a terminal device or a media server participating in the network live streaming service.

In the case where the encoder is operating in a terminal device of a live streaming room with the network live streaming service, the computer program product according to the present disclosure runs on the terminal device. Consequently, the generated video stream is pushed to the media server participating in the network live streaming service, such that the media server further pushes the video stream to the corresponding terminal users in the live streaming room.

Conversely, in the case where the encoder is operating in a media server of a live streaming room with the network live streaming service, the computer program product according to the present disclosure runs on the media server. Consequently, the generated video stream is pushed to the terminal device of the terminal users in the live streaming room participating in the network live streaming service.

Based on the above embodiments, it can be understood that the scenarios of the present disclosure are broadly deployed, such as on the server and on the terminal device. In the case where the present disclosure serves the network live streaming service, the actual viewing experience for the live streaming video stream and the user experience of the live streaming room are improved.

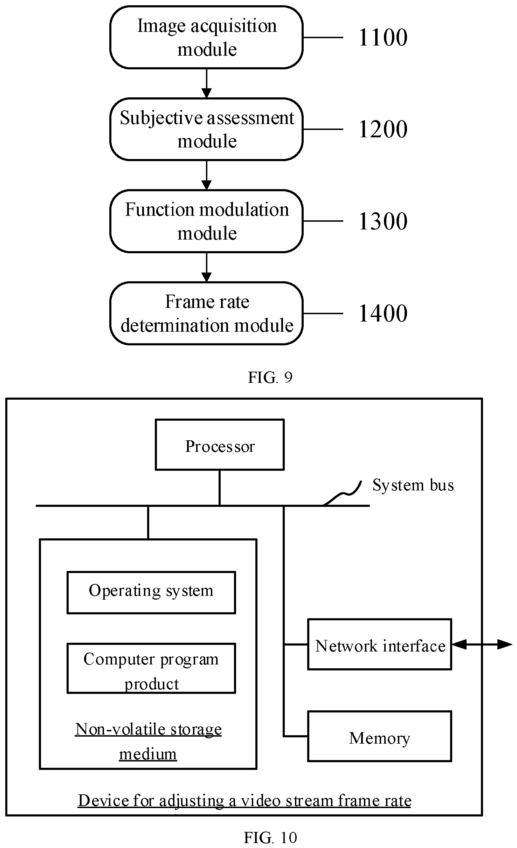

Referring to FIG. 9, an apparatus for adjusting a video stream frame rate is provided according to some embodiments of the present disclosure. The apparatus includes an image acquisition module 1100, a subjective assessment module 1200, a function modulation module 1300, and a frame rate determination module 1400. The image acquisition module is configured to acquire a current image frame required for generating a video stream; the subjective assessment module 1200 is configured to determine subjective assessment parameters of the current image frame, where the subjective assessment parameters include a reference frame rate suitable for encoding the current image frame and a subjective quality indicator to be acquired by encoding at the reference frame rate; the function modulation module 1300 is configured to acquire, by inputting an output bandwidth of an encoder into a parameter optimization model, an approximate function characterizing a mapping relationship between encoding frame rates and objective quality indicators at the output bandwidth; and the frame rate determination module 1400 is configured to solve a numerical approximation point corresponding to the subjective assessment parameters using the approximate function, and acquire an encoding frame rate corresponding to the numerical approximation point as an optimal frame rate for encoding the current image frame.

Based on the above embodiments, in some embodiments, the image acquisition module includes: an image rendering inverse unit, configured to render a data frame collected by a camera unit into a texture image; a format conversion unit, configured to convert the texture images into an image frame of a specific format and store the image frame of the specific format in an image space; and an image calling unit, configured to acquire each image frame from the image space based on a timestamp as the current image frame.

Based on the above embodiments, in some other embodiments, the image acquisition module includes: a decoding processing unit, configured to acquire an image frame of a specific format by decoding an original video stream submitted by a terminal device and store the image frame of the specific format in an image space; and an image calling unit, configured to acquire each image frame from the image space based on a timestamp as the current image frame.

Based on any one of the embodiments of the present disclosure, in some embodiments, the subjective assessment module 1200 includes: a transition identification unit, configured to determine, using a predetermined transition identification model, whether the current image frame belongs to a transition image; an image analysis unit, configured to determine a difference in image size between the current image frame and a preceding image frame by performing image analysis on the current image frame in a case where the current image frame belongs to the transition image; a parameter recalculation unit, configured to recalculate the subjective assessment parameters of the current image frame in a case where the difference is greater than a predetermined threshold; and a parameter calling unit, configured to call subjective assessment parameters of a preceding image frame of the current image frame as the subjective assessment parameters of the current image frame in a case where the current image frame belongs to a non-transition image.

Based on any one of the embodiments of the present disclosure, in some embodiments, the subjective assessment module 1200 includes: a complexity calculation unit, configured to calculate image complexity of the current image frame and several subsequent image frames; a difference calculation unit, configured to calculate difference information between the image complexity of the current image frame and image complexity of a preceding image frame; a frame rate adjustment unit, configured to acquire the reference frame rate of the current image frame by adjusting a reference frame rate of the preceding image frame based on the difference information; and a parameter calculation unit, configured to determine a subjective quality indicator corresponding to the reference frame rate based on the reference frame rate using a predetermined subjective curve function characterizing a mapping relationship between reference frame rates and subjective quality indicators.

Based on any one of the embodiments of the present disclosure, following the frame rate determination module 1400, some embodiments include: an encoding execution module, configured to call the encoder to encode the current image frame into the video stream at the optimal frame rate and the output bandwidth; and an iterative correction module, configured to acquire the current image frame by decoding the video stream, assess an objective quality indicator of the current image frame, and iteratively update the parameter optimization model based on the objective quality indicator and the optimal frame rate.

Based on the previous embodiments, in some embodiments, the iterative correction module includes: a decoding processing unit, configured to acquire the current image frame by decoding the video stream, and determine the current image frame as a first image frame; a pre-call unit, configured to acquire the current image frame prior to encoding as a second image frame; and an indicator calculation unit, configured to calculate to acquire an objective quality indicator of the first image frame using a predetermined formula with the second image frame as a reference.

Based on any one of the embodiments of the present disclosure, in some embodiments, the objective quality indicator is the PSNR.

Some embodiments of the present disclosure further provide a device for adjusting a video stream frame rate. As shown in FIG. 10, a schematic diagram of an internal structure of the device for adjusting the video stream frame rate is illustrated. The device for adjusting the video stream frame rate includes a processor, a computer-readable storage medium, a memory, and a network interface that are connected via a system bus. The computer-readable non-transitory readable storage medium of the device for adjusting the video stream frame rate stores an operating system, a database, and one or more computer-readable instructions. The database stores sequences of information. The one or more computer-readable instructions, when loaded and executed by the processor, cause the processor to perform the method for adjusting the video stream frame rate.

The processor of the device for adjusting the video stream frame rate is configured to provide computational and control capabilities to support operation of the device for adjusting the video stream frame rate. The memory of the device for adjusting the video stream frame rate stores one or more computer-readable instructions. The one or more computer-readable instructions, when loaded and executed by the processor, cause the processor to perform the method for adjusting the video stream frame rate of the present disclosure. The network interface of the device for adjusting the video stream frame rate is configured to connect and communicate with the terminal.

Those skilled in the art should understand that the structure illustrated in FIG. 10 is merely a block diagram of part of the structure related to the solutions according to the present disclosure and does not constitute a limitation on the device for adjusting the video stream frame rate to which the solutions according to the present disclosure are applicable. The specific device for adjusting the video stream frame rate includes more or fewer assemblies than shown in the drawing, or combine some assemblies, or have different assembly arrangements.

In the embodiments, the processor is configured to achieve the specific functions of various modules in FIG. 9, and the memory stores program codes and various data required to implement the above modules or submodules. The network interface is configured to achieve data transmission between the user terminal and the server. In the embodiments, the non-transitory readable storage medium stores program codes and data required to implement all modules in the apparatus for adjusting the video stream frame rate according to the present disclosure, and the server calls the program codes and data of the server to implement the functions of all modules.

The present disclosure further provides a non-transitory readable storage medium storing one or more computer-readable instructions. The one or more computer-readable instructions, when loaded and executed by one or more processors, cause the one or more processors to perform the method for adjusting the video stream frame rate according to any one of the embodiments of the present disclosure.

The present disclosure further provides a computer program product including one or more computer programs/instructions. The one or more computer programs/instructions, when loaded and executed by one or more processors, cause the one or more processors to perform the method according to any one of the embodiments of the present disclosure.

Those of ordinary skill in the art should understand that all or part of processes of the methods according to the above embodiments of the present disclosure can be implemented by instructing relevant hardware through one or more computer programs. The one or more computer programs are stored in a non-transitory readable storage medium, and when loaded and executed, include the processes of the method embodiments described above. The above storage medium is a computer-readable storage medium such as a magnetic disk, an optical disk, and a read-only memory (ROM), or a random access memory (RAM).

In summary, the present disclosure adaptively controls the encoder to encode the video stream at the optimal frame rate, such that the live streaming experience of the video stream in the network live streaming is improved.

**Claims**

1. A method for adjusting a video stream frame rate, comprising:

    acquiring a current image frame required for generating a video stream;
    determining subjective assessment parameters of the current image frame, wherein the subjective assessment parameters comprise a reference frame rate suitable for encoding the current image frame and a subjective quality indicator to be acquired by encoding at the reference frame rate;
    acquiring, by inputting an output bandwidth of an encoder into a parameter optimization model, an approximate function characterizing a mapping relationship between encoding frame rates and objective quality indicators at the output bandwidth; and
    solving a numerical approximation point corresponding to the subjective assessment parameters using the approximate function, and acquiring an encoding frame rate corresponding to the numerical approximation point as an optimal frame rate for encoding the current image frame.

2. The method for adjusting the video stream frame rate according to claim 1, wherein acquiring the current image frame required for generating the video stream comprises:

    rendering a data frame collected by a camera unit into a texture image;
    converting the texture image into an image frame of a specific format and storing the image frame of the specific format in an image space; and
    acquiring each image frame from the image space based on a timestamp as the current image frame.

3. The method for adjusting the video stream frame rate according to claim 1, wherein acquiring the current image frame required for generating the video stream comprises:

    acquiring an image frame of a specific format by decoding an original video stream submitted by a terminal device and storing the image frame of the specific format in an image space; and
    acquiring each image frame from the image space based on a timestamp as the current image frame.

4. The method for adjusting the video stream frame rate according to claim 1, wherein determining the subjective assessment parameters of the current image frame comprises:

    determining, using a predetermined transition identification model, whether the current image frame belongs to a transition image; and
    determining a difference in image size between the current image frame and a preceding image frame by performing image analysis on the current image frame in a case where the current image frame belongs to the transition image, and recalculating the subjective assessment parameters of the current image frame in a case where the difference is greater than a predetermined threshold; or
    calling subjective assessment parameters of a preceding image frame of the current image frame as the subjective assessment parameters of the current image frame in a case where the current image frame belongs to a non-transition image.

5. The method for adjusting the video stream frame rate according to claim 1, wherein determining the subjective assessment parameters of the current image frame comprises:

    calculating image complexity of the current image frame and several subsequent image frames;
    calculating difference information between the image complexity of the current image frame and image complexity of a preceding image frame;
    acquiring the reference frame rate of the current image frame by adjusting a reference frame rate of the preceding image frame based on the difference information; and
    determining a subjective quality indicator corresponding to the reference frame rate based on the reference frame rate using a predetermined subjective curve function characterizing a mapping relationship between reference frame rates and subjective quality indicators.

6. The method for adjusting the video stream frame rate according to claim 1, wherein upon acquiring the encoding frame rate corresponding to the numerical approximation point as the optimal frame rate for encoding the current image frame, the method further comprises:

calling the encoder to encode the current image frame into the video stream at the optimal frame rate and the output bandwidth; and
acquiring the current image frame by decoding the video stream, assessing an objective quality indicator of the current image frame, and iteratively updating the parameter optimization model based on the objective quality indicator and the optimal frame rate.

7. The method for adjusting the video stream frame rate according to claim 6, wherein acquiring the current image frame by decoding the video stream and assessing the objective quality indicator of the current image frame comprise:

acquiring the current image frame by decoding the video stream, and determining the current image frame as a first image frame;
acquiring the current image frame prior to encoding as a second image frame; and
calculating to acquire an objective quality indicator of the first image frame using a predetermined formula with the second image frame as a reference.

8. The method for adjusting the video stream frame rate according to any one of claims 1 to 7, wherein the objective quality indicator is a peak signal-to-noise ratio.

9. An apparatus for adjusting a video stream frame rate, comprising:

an image acquisition module, configured to acquire a current image frame required for generating a video stream;
a subjective assessment module, configured to determine subjective assessment parameters of the current image frame, wherein the subjective assessment parameters comprise a reference frame rate suitable for encoding the current image frame and a subjective quality indicator to be acquired by encoding at the reference frame rate;
a function modulation module, configured to acquire, by inputting an output bandwidth of an encoder into a parameter optimization model, an approximate function characterizing a mapping relationship between encoding frame rates and objective quality indicators at the output bandwidth output bandwidth of an encoder into a parameter optimization model; and
a frame rate determination module, configured to solve a numerical approximation point corresponding to the subjective assessment parameters using the approximate function, and acquire an encoding frame rate corresponding to the numerical approximation point as an optimal frame rate for encoding the current image frame.

10. A device for adjusting a video stream frame rate, comprising: a central processing unit and a memory, wherein the central processing unit, when calling and running one or more computer programs stored in the memory, is caused to perform the method as defined in any one of claims 1 to 8.

11. A non-transitory readable storage medium, storing one or more computer programs implemented by the method as defined in any one of claims 1 to 8 in a form of one or more computer-readable instructions; wherein the one or more computer programs, when called and run by a computer, cause the computer to perform the corresponding method.

12. A computer program product, comprising: one or more computer programs/instructions, wherein the one or more computer programs/instructions, when loaded and executed by a processor, cause the processor to perform the method as defined in any one of claims 1 to 8.

FIG. 1

FIG. 2

Acquiring a current image frame required for generating a video stream — S1100

Determining a reference frame rate and a subjective quality indicator matching the current image frame, the subjective assessment parameters including a reference frame rate suitable for encoding the current image frame and a subjective quality indicator to be acquired by encoding at the reference frame rate — S1200

Acquiring, by inputting an output bandwidth of an encoder into a parameter optimization model, an approximate function characterizing a mapping relationship between encoding frame rates and objective quality indicators at the output bandwidth — S1300

Solving a numerical approximation point corresponding to the subjective assessment parameters using the approximate function, and acquiring an encoding frame rate corresponding to the numerical approximation point as an optimal frame rate for encoding the current image frame — S1400

FIG. 3

Rendering a data frame collected by a camera unit into a texture image — S1111

Converting the texture image into an image frame of a specific format and storing the image frame of the specific format in an image space — S1112

Acquiring each image frame from the image space based on a timestamp as the current image frame — S1113

FIG. 4

Determining, using a predetermined transition identification model, whether the current image frame belongs to a transition image

S1210

Determining a difference in image size between the current image frame and a preceding image frame by performing image analysis on the current image frame in the case where the current image frame belongs to the transition image

S1220

Recalculating the subjective assessment parameters of the current image frame in the case where the difference is greater than a predetermined threshold

S1230

Calling subjective assessment parameters of a preceding image frame of the current image frame as the subjective assessment parameters of the current image frame in the case where the current image frame belongs to a non-transition image

S1240

FIG. 5

Calculating image complexity of the current image frame and several subsequent image frames

S1231

Calculating difference information between the image complexity of the current image frame and image complexity of a preceding image frame

S1232

Acquiring the reference frame rate of the current image frame by adjusting a reference frame rate of the preceding image frame based on the difference information

S1233

Determining a subjective quality indicator corresponding to the reference frame rate based on the reference frame rate using a predetermined subjective curve function characterizing a mapping relationship between reference frame rates and subjective quality indicators

S1234

FIG. 6

| Acquiring a current image frame required for generating a video stream | S1100 |

↓

| Determining a reference frame rate and a subjective quality indicator matching the current image frame, the subjective assessment parameters including a reference frame rate suitable for encoding the current image frame and a subjective quality indicator to be acquired by encoding at the reference frame rate | S1200 |

↓

| Acquiring, by inputting an output bandwidth of an encoder into a parameter optimization model, an approximate function characterizing a mapping relationship between encoding frame rates and objective quality indicators at the output bandwidth | S1300 |

↓

| Solving a numerical approximation point corresponding to the subjective assessment parameters using the approximate function, and acquiring an encoding frame rate corresponding to the numerical approximation point as an optimal frame rate for encoding the current image frame | S1400 |

↓

| Calling the encoder to encode the current image frame into the video stream at the optimal frame rate and the output bandwidth | S1500 |

↓

| Acquiring the current image frame by decoding the video stream, assessing an objective quality indicator of the current image frame, and iteratively updating the parameter optimization model based on the objective quality indicator and the optimal frame rate | S1600 |

FIG. 7

| Acquiring a current image frame by decoding a video stream, and determining the current image frame as a first image frame | S1610 |

↓

| Acquiring the current image frame prior to encoding as a second image frame | S1620 |

↓

| Calculating to acquire an objective quality indicator of the first image frame using a predetermined formula with the second image frame as a reference | S1630 |

FIG. 8

Image acquisition module — 1100

Subjective assessment module — 1200

Function modulation module — 1300

Frame rate determination module — 1400

FIG. 9

Processor

System bus

Operating system

Computer program product

Non-volatile storage medium

Network interface

Memory

Device for adjusting a video stream frame rate

FIG. 10

## INTERNATIONAL SEARCH REPORT

| International application No. |
|---|
| **PCT/CN2023/089842** |

**A. CLASSIFICATION OF SUBJECT MATTER**

H04N19/149(2014.01)i; H04N19/154(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXT; CNKI: 包佳晶, 帧率, 码率, 主观, 客观, 评价, 曲线, 函数, 交点, 逼近点, 最近, 最佳, 最优, frame rate, bit rate, subjective, objective, evaluation, curve, line, function, intersection point, crossing point, crossover point, nearest, optimal, optimum, best

**C. DOCUMENTS CONSIDERED TO BE RELEVANT**

| Category* | Citation of document, with indication, where appropriate, of the relevant passages | Relevant to claim No. |
|---|---|---|
| PX | CN 114900692 A (YOUBANDAO (BEIJING) INFORMATION TECHNOLOGY CO., LTD.) 12 August 2022 (2022-08-12) description, paragraphs [0039]-[0160], and figures 2-5 | 1-12 |
| A | CN 105208390 A (HIKVISION DIGITAL TECHNOLOGY CO., LTD. et al.) 30 December 2015 (2015-12-30) description, paragraphs [0051]-[0059] and [0112]-[0128] | 1-12 |
| A | CN 113873291 A (GUANGZHOU HUYA TECHNOLOGY CO., LTD.) 31 December 2021 (2021-12-31) entire document | 1-12 |
| A | CN 103873853 A (JIANGSU UNIVERSITY) 18 June 2014 (2014-06-18) entire document | 1-12 |
| A | JP H0690441 A (NIPPON TELEGRAPH & TELEPHONE CORPORATION) 29 March 1994 (1994-03-29) entire document | 1-12 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 July 2023** | **29 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/089842**

| C. | DOCUMENTS CONSIDERED TO BE RELEVANT | |
|---|---|---|
| Category* | Citation of document, with indication, where appropriate, of the relevant passages | Relevant to claim No. |
| A | JP 2015211424 A (NIPPON TELEGRAPH & TELEPHONE CORPORATION) 24 November 2015 (2015-11-24)<br>    entire document | 1-12 |

Form PCT/ISA/210 (second sheet) (July 2022)

**INTERNATIONAL SEARCH REPORT**
Information on patent family members

International application No.

**PCT/CN2023/089842**

| Patent document cited in search report | | | Publication date (day/month/year) | Patent family member(s) | | | Publication date (day/month/year) |
|---|---|---|---|---|---|---|---|
| CN | 114900692 | A | 12 August 2022 | None | | | |
| CN | 105208390 | A | 30 December 2015 | None | | | |
| CN | 113873291 | A | 31 December 2021 | None | | | |
| CN | 103873853 | A | 18 June 2014 | None | | | |
| JP | H0690441 | A | 29 March 1994 | None | | | |
| JP | 2015211424 | A | 24 November 2015 | JP | 6145069 | B2 | 07 June 2017 |

Form PCT/ISA/210 (patent family annex) (July 2022)